# EUROPEAN PATENT SPECIFICATION

(11) **EP 1 274 011 B1**
(45) Date of publication and mention of the grant of the patent: **03.05.2017**
(21) Application number: 01440213.5
(22) Date of filing: 06.07.2001
(51) Int. Cl.: H04L 29/08, G06F 9/50, H04L 29/06

(54) **A METHOD AND SYSTEM FOR ROUTING AND LOGGING A REQUEST**
VERFAHREN UND SYSTEM ZUM LEITEN UND REGISTRIEREN EINER ANFRAGE
MÉTHODE ET SYSTÈME POUR GUIDER ET ENREGISTRER UNE REQUÊTE

(43) Date of publication of application: 08.01.2003
(73) Proprietor: ALCATEL LUCENT, 92100 Boulogne-Billancourt (FR)
(72) Inventor: Chantrain, Dominique, B-2650 Edegem (BE)
(74) Representative: Wetzel, Emmanuelle

(56) References cited:
- EP-A- 0 537 098
- EP-A- 0 930 759
- EP-A- 0 949 567
- WO-A-00/65441
- WO-A-01/22215
- WO-A-01/39012

## Description

### Field of the invention

The invention relates to the management of computer networks and in particular to the fields of application routing and logging of events.

### Background and prior art

A number of technologies for managing of computer and communication networks are known from the prior art, such as methods relating to adding new applications, methods for logging of events and for application routing.

Network management architectures like the telecommunication management network (TMN) and protocols like the simple network management protocol (SNMP) allow to remotely manage network elements or terminals from a central management station.

US-A- 6 243 457 shows an apparatus and method for deploying and updating services in a telephone network. For the management of an intelligent network (IN), the TMN is adapted such that all the management information are defined as managed objects and transmitted within the management network.

US-A- 6 012 152 shows a software fault management system for managing software faults in a communication network. The system includes an intelligent multi-agent portion having a plurality of agents which process the software faults utilizing the functional model from an intelligent management information base, case-based information, and other management information. The intelligent management information base and the intelligent multi-agent portion are compliant with the TMN principals and framework. Other TMN based network management methods are known for example from US-A- 5 974 459 and US-A- 6 205 121.

US-A- 6 240 457 shows a computer network management protocol including specification of multiple date items. The computer network operates in accordance with a management protocol such as SNMP. The protocol is modified such that a request communication from a management agent can be a type specifying multiplicity of data items and has a first part which identifies the type of the request.

US-A- 6 182 157 shows a flexible SNMP trap mechanism. An alarm monitoring apparatus and method allows a user of a management station to dynamically create and flexibly configure SNMP traps based on any management information base variable without having to define an exhaustive set of trap definitions in a management information base. An apparatus for monitoring status of a network device includes a processor assembly coupled to the network device and a data memory member accessible by the processor assembly for indicating user-defined alarm thresholds of the subject device is also included in this disclosure.

US-A- 6 247 149 shows a distributed diagnostic logging system for maintaining and retrieving diagnostic logging information. A local cache of logging information is maintained at an analysis computer and the local cache is first examined to determine if diagnostic information exists in the cache or if it must be retrieved from a remote server. If the requested diagnostic information is available in the local cache, the local cache is accessed to retrieve the information. If any portion of the requested diagnostic information is not available in the local cache, the information is located and read from the appropriate log file(s) on the remote server, and then stored in the local cache so that subsequent requests for that diagnostic information will not necessitate accessing the remote computer.

US-A- 6 230 198 shows a method for server-to-server event logging. A server-to-server event message is generated including 1) an event identifier, 2) any text insert pertinent to the event message, and 3) a source trail indicating the origin and history of the event, the source trail comprising an identifier of any server forwarding the event, each identifier separated by a special character, so that the origin and any subsequently transmitting servers may be known. Further, the source trail of a received server-to-server event message is parsed to determine each identifier in the source trail, and the event message transmitted to a receiving server only if the receiving server identifier is absent from the parsed source trail, thus preventing any loops which might cause the event to be repeated. Additionally, a receiving server has a listing of events by event identifier with corresponding text messages in the text language of the receiving server. The received event identifier is found in the listing, and the receiving server logs the event, using the identified text message in the listing in the text language of the receiving server, and employing the text inserts.

From US-A- 5 701 484 a method for routing an object in a distributed computing system along an action path which defines the logical path to be traversed by the object is known. The action path consists of action stops naming or describing functionally principals (people or automated mechanisms) required to act upon the routed object in a prescribed order. The object routing system propagates the object along this action path, and monitors and controls its progress until it completes the path. The system includes mechanisms of dispatching the routed object between principals, finding the principals required to act on the routed object, notifying the principals in turn of their required action, and potentially relocating the routed object to the nodes of the principals.

US-A- 6 212 640 shows a method and apparatus for sharing resources in a network environment. An application running on a client can access a resource on a remote computer by submitting a request via an Internet browser. The request is analysed, converted to a proper format and is transferred over the network lines to a server that can satisfy the request. If a request submitted by an application to a server is denied, then a server that entrusts the application is identified, and the request is submitted to that server. A servlet is implemented on that server to accept the requests submitted by a trusted application. The submitted requests are analysed by the servlet and are forwarded to a resource server that can satisfy the requests. A response from the resource server is routed through the servlet back to the requesting application.

WO 01/22215 A discloses a mechanism for implementing multiple thread pools in a computer system to optimize system performance. A plurality of thread pools is initially allocated within a process space, with each thread pool comprising one or more threads. When a request is received it is processed to determine with which thread pool the request is to be associated.

EP-A-0 537 098 discloses an event handling mechanism having a filtering process and an action association process. The events of an event stream or extremes are filtered into categories or groups of events. Once categorized, an action or actions is associated with the categorized event. The associated action can be logging the event, routing the event to the electronic address of a user, or sending the event to an application program for further processing.

Further a variety of methods for dynamic deployment of software components are known from the prior art. The deployment of a software component can be initialised by a corresponding client request to download a new module from a server in a "pull" configuration where the new software component is downloaded from the internet and installed on a personal computer. Alternatively a new software component can be deployed in a so called "push" mode, whereby a central server triggers the update of the new software component on all client personal computers in the network, e. g. in an office environment. In particular US-A- 6 230 194 shows a system for upgrading the software contents of a network interface device connecting a client computer system to an external network.

The network interface device is configured for the client system by automated procedures and protocols initiated from a remote server.

### Summary of the invention

It is an object of the invention to provide an improved method for routing a request to an application and an improved method for logging of events in networks, such as computer and telecommunication networks, as well as a corresponding mapper, computer system and computer program product.

These objects of the invention are solved by applying the respective features of the independent claims.

Preferred embodiments of the invention are given in the dependent claims.

### Brief description of the drawings.

The invention will be described in the following in greater detail by making reference to the drawings in which:
Fig. 1 is a block diagram of a computer system in accordance with the invention,
Fig. 2 is illustrative of the registration of a logging module and applications in the mapper of the computer system of Fig. 1,
Fig. 3 is illustrative of a method for routing of applications and logging of events in accordance with the invention.

The mapper of the invention enables to provide the fundaments for applications for remote management. An example for such an application is a generic logging module.

In accordance with a preferred embodiment of the invention a network element receiving protocol requests has a mapper. A variety of applications are registered with the mapper by storing of a descriptor. The descriptor specifies the protocol requests a particular application is willing to deal with. When a protocol request is received by the network element the request is analysed and the result of the analysis is compared to the descriptors of the registered applications. The best matching application is selected and the protocol request is routed to this application.

The invention is particularly advantageous in that it allows communication between a number of different protocol stacks and a number of different applications. This way an application can benefit from protocol functionality that is targeted primarily at other applications. For example the Radius protocol is normally associated with an authentication / authorisation / accounting module, but through the mapper requests can be routed such that also a presence module can get access to the information. The invention enables a very flexible coupling between the communication layers of request and services/applications/servlets to react on it. Specifically as in the context of dynamic deployment of software components (especially in so-called active networks) the loose coupling is valuable.

It is a further advantage of the invention that it provides flexibility for adding new applications to the registry of the mapper, to modify descriptors of applications and / or to delete applications from the registry.

Another aspect of the invention is logging of events. A logging module is registered with the mapper like an application. The descriptor of the logging module specifies the protocol requests or triggers the logging module is supposed to intercept for the purposes of logging corresponding events. This allows to dynamically start a logging agent for previously installed applications for generating of log reports without a need to modify the previously installed applications in any respect.

In accordance with a preferred embodiment of the invention a protocol request which matches the descriptor of an application is routed to this application and a copy of the request is send to the logging module for generating the log file - provided that the request also matches the descriptor of the logging module. By capturing some or all of the communication passed via the mapper an operator can analyse the network traffic even with respect to software components which do not have a logging interface.

Further this enables to install and activate logging only when needed in order to efficiently use processing power. As a further advantage logging can be fine-tuned to look for specific problems within a specific application module by storing a corresponding descriptor for the logging module in the mapper.

Further with respect to application development, in particular third party application developers, it is advantageous that the registration of applications and the logging of events is made possible by the present inventions without imposing restrictions and interfaces.

It is important to note that the present invention is independent of specific protocols such as hypertext transfer protocol (http), Radius, COPS, SIP, short message service (SMS), SNMP, IETF, but that it enables reuse of an application layer routing system (request/response based) for a multiplicity of protocolls. This is of particular importance to accomodate future protocol definitions.

The present invention is particularly advantageous for operators with respect to the deployment and maintenance of customer premises equipment, such as ADSL modems with respect to reducing of operational costs.

According to a further aspect of the invention the mapper and logging functionalities are implemented within the framework provided by the open services gateway initiative (OSGi), in particular by relying on the OSGi service gateway specification which is available on the Internet at www.osgi.org..

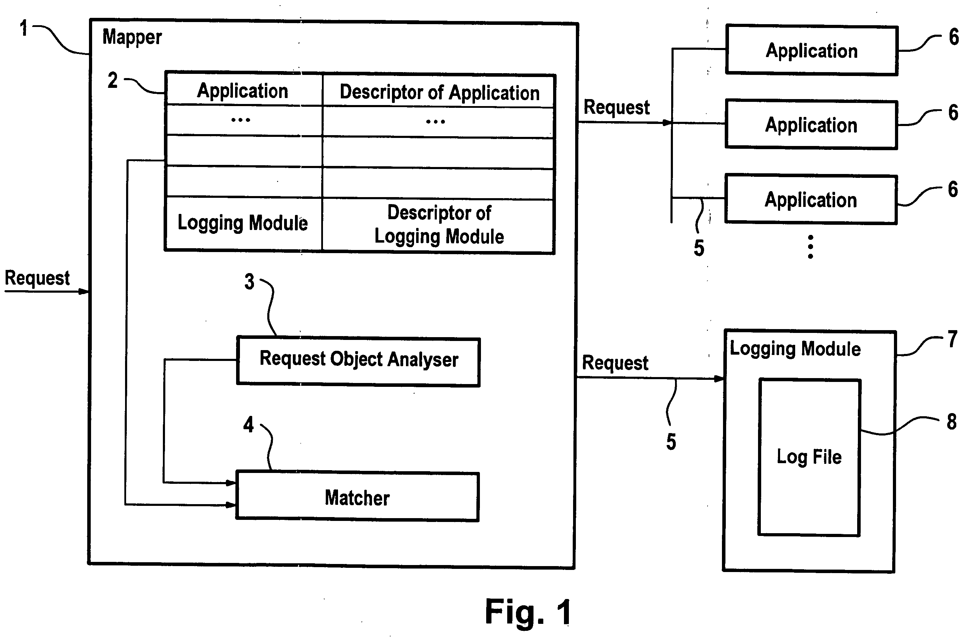

Fig. 1 shows a computer system having a mapper 1. The mapper 1 can be implemented in any network element receiving requests, such as a customer premises gateway, IP gateway or any other network gateway or element.

The mapper has a registry 2 which is a database for storing descriptors of applications and a descriptor of a logging module. In order to register an application a descriptor for the application needs to be entered into the registry 2. Typically a descriptor of an application is descriptive of protocol requests the application is willing to deal with. Further the corresponding entry into the registry 2 needs to identify a location of the application.

A logging module can be registered in the registry 2 like an application. The descriptor of the logging module specifies a class of protocol requests or triggers which need to be forwarded to the logging module to create a log file.

Further the mapper 1 has a request object analyser 3 for analysing incoming requests. As a result of the analysis the request object analyser 3 outputs a descriptor to a matcher 4 of the mapper 1. The matcher 4 is connected to the request object analyser 3 and to the registry 2.

The mapper 1 is connected to a communication network 5 for transmitting of requests to applications 6 and / or to a logging module 7. Typically the mapper, applications and the logging module will run on the same machine but can also be distributed.

An application 6 can be any kind of software component, such as a text processing component, a spell checker, a telecommunication component or a software component for any other kind of functionality.

The logging module 7 is a special application for logging of events. The logging module 7 contains a log file 8 for logging of such events.

In operation the mapper 1 receives a request from another network element, such as a request of a user for a certain functionality or action. In the case of a telecommunication network the request can be an incoming phone call with caller line identification, i. e. the phone number of the calling party.

However the incoming request can have a variety of other protocols the mapper 1 can deal with. The incoming protocol request or request object is analysed by the mapper 1 by means of the request object analyser 3. As a result of the analysis the request object analyser 3 outputs a descriptor of the request to the matcher 4. Hence, the result of the request analysis is a descriptor which is inputted into the matcher 4.

Further the matcher 4 receives a descriptor from the registry 2. As a consequence the input for the matcher 4 is a pair of descriptors. The matcher 4 compares the descriptor provided by the request object analyser 3 and the descriptors of the applications of the registry 2. In case of a match of the descriptor provided by the request object analyser 3 and a descriptor of one of the applications of the registry 2 the corresponding application is selected by the mapper 1 and the request is forwarded to this specific application 6 via the communication network 5. The location of the selected application 6 is read from the registry 2.

If no perfectly matching descriptor can be found in the registry 2 for the descriptor provided by the request object analyser 3 a best matching descriptor is identified to select one of the applications 6 to which the request is forwarded.

Further the matcher 4 compares the descriptor provided by the object analyser 3 and the descriptor of the logging module stored in the registry 2. In case of a match the mapper 1 sends a copy of the request to the logging module 7. The request received by the logging module 7 is added to the log file 8 for recordation of the corresponding event. After some time the log file 8 of the logging module 7 is read and analysed for example to monitor the network traffic and/or identify errors or other problems occurring in the network communication.

In the following it is assumed that the applications 6 are servlets and that the extend mark up language (XML) is used to formulate descriptors for the applications 6 and the logging module 7. Further it is assumed that the descriptor outputted by the request object analyser 3 is also provided in XML format.

For each incoming request the mapper 1 compares the XML message description of the protocol request which is outputted by the request object analyser 3 to the list of XML servlet descriptions contained as descriptors in the registry 2 for the applications 6. As a result the mapper 1 identifies one of the applications 6 whose description best matches the incoming protocol request. In case there is no perfect match, the best match is defined as the one where the least substitution of wild cards is needed. The table below gives an example which uses XML to describe both the application - in the example considered here a servlet - and the request:

| XML Servlet Description | XML Message Description | Match |
|---|---|---|
| <http> | <http> | True |
| <path>.*\.xml</path> | <host>host</host> | |
| </http> | <port>80</port> | |
| | <path>/Shop/Fruits.xml</path> | |
| | </http> | |
| <http> | <http> | True |
| <param name="name">.* | <host>host</host> | |
| </param> | <port>80</port> | |
| </http> | <path>/Shop/Intro</path> | |
| | <param name="name">Alice</param> | |
| | </http> | |

In the example given in the first row of the above table the application (servlet) has registered to receive any requests (messages, events) that contain information on a path, and whereby the path is of the form *.xml. This is defined by the descriptor of the application given in the first row of the table under XML Servlet Description. This descriptor is stored in the registry 2.

The XML descriptor next to this descriptor of the application in the first row under XML Message Description describes a protocol request. This descriptor is outputted by the request object analyser 3 in XML format. The request complies to the description given by the descriptor of the application as it contains information on a path and the path is of the form shop / fruit.xml. As a consequence the logic value of the variable "match" becomes "true", such that the request is forwarded to this application.

The second row of the below table gives another example. The application (servlet) has registered to receive any messages that contain the parameter "name", irrespective of its value as defined by the descriptor given in the second row under XML servlet description. Again the output of the request object analyser 3 for a specific request is given in the above table in the second row under XML Message Description. As apparent from this XML descriptor the request matches with the application as the XML descriptor of the request contains the parameter name (having the value "Alice") which is required by the descriptor of the application. As a consequences the variable match again becomes "true" such that the application is selected and the request is forwarded to the application by the mapper 1.

The same mechanism can also be employed with respect to the logging module. In case there is an additional match with respect to the descriptor of the logging module a copy of the request is forwarded to the logging module 7. The logging module 7 can be controlled remotely by changing the descriptor of the logging module in the registry 2 in accordance with the logging needs.

The mapper 1 can be realized as an internal module in a service platform to centralize all protocol logic. That is, the mapper 1 receives requests and messages from network elements - the so called triggers - and is responsible for distributing these triggers to application modules that subscribed to them, including typically converting the external protocol format into an internal trigger format. In the other direction the mapper 1 can deal with commands from the applications towards network elements in order to transform the commands into protocol messages that can be understood by the network elements.

It is important to note that the mapper 1 can reside on a central platform but can also be part of service platform logic that is running on network elements such as a residential gateway. It is a particular advantage of the mapper 1 that it can deal with applications that are dynamically installed by providing mechanisms for applications to subscribe to triggers.

The mapper enables registration of both syntax (form) and semantics (content) by means of a descriptor. For example, two cases can be distinguished:
a) A software module that behaves as an application registers with the mapper that it is interested in receiving request of a certain type and with certain parameters, for example getting a message when a user starts a session, whereby the message should include the parameters user ID and IP address.
b) A software module that behaves as a protocol stack registers with the mapper by registering the following descriptor: The software module offers the possibility to send messages in protocol X (for example Radius, COPS, ...) and the following application programming interfaces... to do so, followed by a specification including syntax and semantics.

The logging module 7 is registered as an application with a special descriptor. The descriptor of the logging module 7 specifies the kinds of request to be forwarded to the logging module 7 for storing of a corresponding event in the log file 8. In the following two examples for the contents of such a logging module descriptor are given:
a) All requests (events, messages) from the module X (either a protocol stack or an application module) are to be sent to the logging module upon event Y if the information contained in the request includes Z.
b) All requests from module X to the mapper 1 are to be sent to the logging module 7.

The functionality of the mapper 1 is particularly advantageous in that it enables communication between on the one hand an arbitrary number of protocol stacks and on the other hand an arbitrary number of applications. In comparison to the prior art where each application is directly associated with a specific protocol this offers increased flexibility for application development, deployment of applications and network management. For example by means of the mapper 1 an application 6 can benefit from protocol functionality that is targeted primarily at other applications.

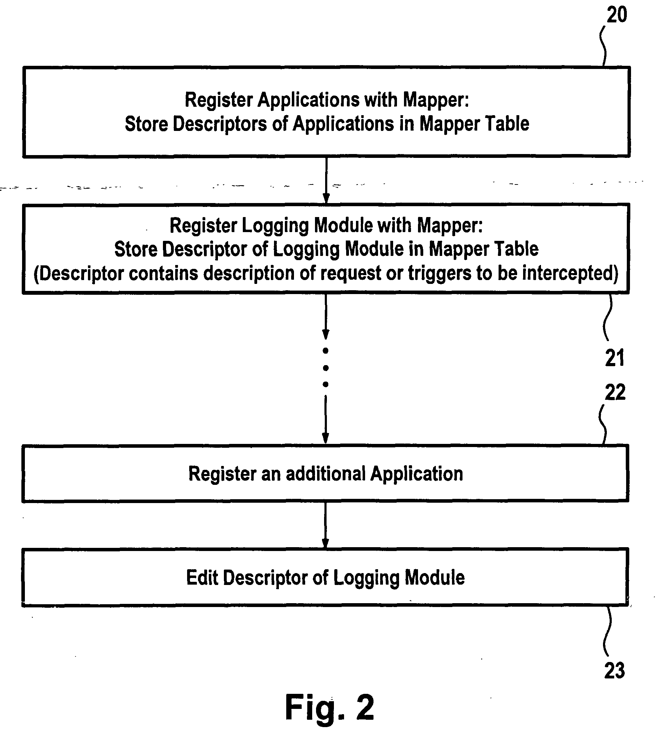

Fig. 2 is illustrative of the registration procedures for registering descriptors within the registry (cf. registry 2 of Fig. 1).

For initialisation of the system the applications are registered with the mapper in step 20 by storing the descriptors of the applications in a mapper table i. e. in a registry (cf. registry 2 of Fig. 1). In step 21 a corresponding registration procedure is performed with respect to the descriptor of a logging module. This descriptor contains a description of the class of requests or triggers to be intercepted by the mapper in order to forward a copy to the logging module in order to log the corresponding event.

After step 21 the normal system operation can start. In step 22 a new application is added to the system by simply registering the new application with the mapper. In other words the descriptor of the additional application is added to the mapper table or registry. Likewise the descriptor of the logging module in the mapper table or registry is replaced or edited in step 23 in order to change the class of requests to be logged.

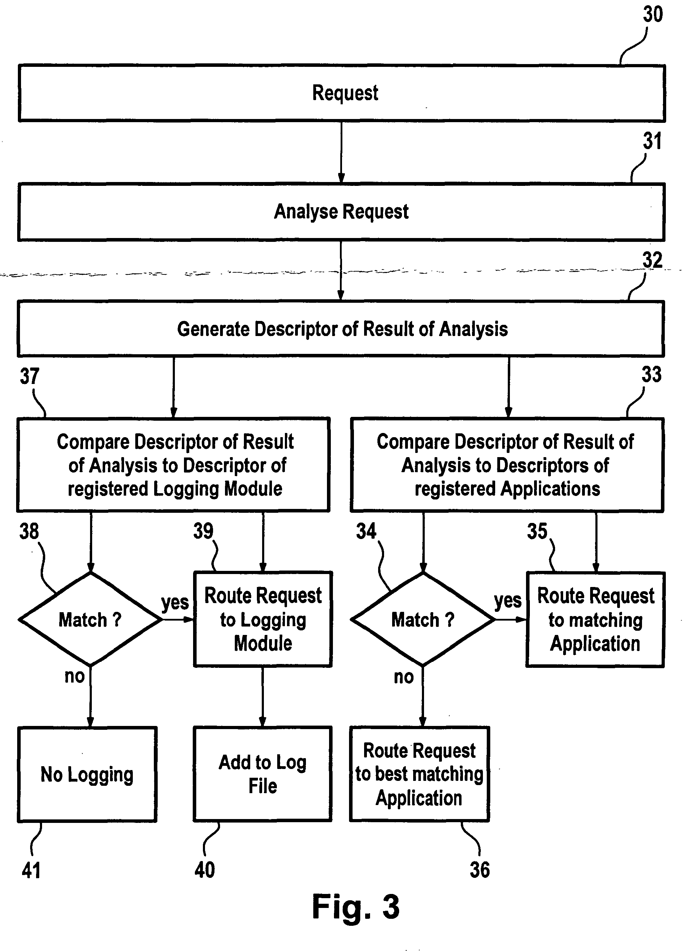

Fig. 3 shows a flow chart illustrating the system operation. In step 30 a request is received by the mapper. The request is analysed by the mapper in step 31. This can be done by the request object analyser - cf. request object analyser 3 of Fig. 1. The request object analyser generates a descriptor for the request as a result of the analysis in step 32.

In step 33 the descriptor generated in step 32 is compared to the descriptors of the register applications. If a match can be found in step 34 the request is routed to the matching application in step 35. If no exact match can be found in step 34 the request is routed to a best matching application in step 36.

In parallel or consecutive to the steps 33 to 36 the descriptor generated in step 32 is also compared to the descriptor of the logging module which is registered with the mapper in step 37. In step 38 it is determined whether the descriptor generated in step 32 and the descriptor of the logging module match. If this is the case a copy of the request is routed to the logging module in step 39 in order to add a corresponding event to a log file in step 40. If no match can be found in step 38 the request is not forwarded to the logging module and there is no logging which is designated by the no operation step 41.

### List of reference numerals

| | |
|---|---|
| mapper | 1 |
| registry | 2 |
| request object analyser | 3 |
| matcher | 4 |
| communication network | 5 |
| application | 6 |
| logging module | 7 |
| log file | 8 |

## Claims

1. A method for logging of an event and routing a request to an application of a set of applications, the method comprising the steps of:
- analysing the request,
- generating a first descriptor for the result of the analysis,
- comparing the first descriptor to second descriptors, each of the second descriptors belonging to an application of the set of applications and one of the second descriptors belongs to the logging module being registered as an application with a special descriptor, wherein the special descriptor belonging to the logging module specifies a class of protocol requests which need to be forwarded to the logging module to create a log file,
- routing the request to the application having a second descriptor matching the first descriptor, and
- sending a copy of the request to the logging module in case of a match of the first descriptor and the second descriptor belonging to the logging module for logging of the event;
- receiving the request by the logging module and adding said request to a log file contained in the logging module for recordation of the corresponding event.

2. The method of claim 1, wherein each of the second descriptors being descriptive of a class of requests acceptable for the corresponding application of the set of applications.

3. The method of claim 1 further comprising storing of the event in a log file by the logging module when a copy of the request is received by the logging module.

4. The method of claims 1 or 3, wherein the second descriptor being descriptive of the class of requests or triggers to be logged as events by the logging module.

5. The method of any of the preceding claims 1 to 4, wherein the first descriptor being generated in a mark up language format, preferably in an extended mark up language (XML) format.

6. The method of any of the preceding claims 1 to 5, wherein each of the second descriptors being stored in a mark up language format, preferably in an extended mark up language (XML) format.

7. The method of any of the preceding claims 1 to 6, wherein the request being a protocol request of a protocol type of a set of protocols.

8. The method of claim 7, wherein the set of protocols comprising one or more of the following protocols: hypertext transfer protocol (http), Radius, COPS, SIP, short message service (SMS), SNMP, IETF.

9. The method of any of the preceding claims 1 to 8, wherein at least a sub-set of the set of applications being servlets.

10. A network element (1) for routing a request to an application (6) of a set of applications, the network element comprising
- means (3) for analysing the request,
- means (3) for generating of a first descriptor for the result of the analysis,
- means (2) for storing of second descriptors, each of the second descriptors belonging to an application of the set of applications and one of the second descriptors belonging to a logging module being registered as an application with a special descriptor, wherein the special descriptor belonging to the logging module specifies a class of protocol requests which need to be forwarded to the logging module to create a log file,
- means (4) for comparing the first descriptor to the second descriptors,
- means (1) for routing the request to the application having a second descriptor matching the first descriptor, and
- means (1) for sending a copy of the request to a logging module (7) in case of a match of the first descriptor and the second descriptor belonging to the logging module for logging of a corresponding event;
whereas the network element is a mapper.

11. The network element of claim 10, wherein each of the second descriptors is descriptive of a class of requests acceptable for the corresponding application of the set of applications.

12. The network element of claim 10, wherein the second descriptor being descriptive of a class of requests or triggers to be logged by the logging module.

13. The network element s of any of the preceding claims 10 to 12, wherein the first descriptor and the second descriptors having a mark up language format, preferably an extended mark up language (XML) format.

14. The network element of any of the preceding claims 10 to 13, wherein the request being of a protocol type of a set of protocols.

15. The network element of claim 14, wherein the set of protocols comprising at least one of the following protocol types: hypertext transfer protocol (http), Radius, COPS, SIP, short message service (SMS), SNMP, IETF.

16. The network element of any of the preceding claims 10 to 15, wherein at least a sub-set of the set of applications being servlets.

17. A computer system comprising an network element in accordance with any of the preceding claims 10 to 16.

18. A computer program product stored on a computer usable medium or in a file for downloading over a computer network, comprising computer readable program means for causing a computer system to perform a method according to anyone of the preceding claims 1 to 9 when the program is run on the computer system.

## Patentansprüche

1. Verfahren zum Protokollieren eines Ereignisses und Routen einer Anfrage zu einer Anwendung aus einer Gruppe von Anwendungen, wobei das Verfahren folgende Schritte umfasst:
- Analysieren der Anfrage,
- Generieren eines ersten Deskriptors für das Ergebnis der Analyse,
- Vergleichen des ersten Deskriptors mit zweiten Deskriptoren, wobei jeder der zweiten Deskriptoren zu einer Anwendung aus der Gruppe von Anwendungen gehört und einer der zweiten Deskriptoren zum Protokollierungsmodul gehört, das als eine Anwendung mit einem bestimmten Deskriptor registriert ist, wobei der bestimmte Deskriptor, der zum Protokollierungsmodul gehört, eine Klasse von Protokollanfragen spezifiziert, die zum Protokollierungsmodul weitergeleitet werden müssen, um eine Protokolldatei zu erstellen,
- Routen der Anfrage zu der Anwendung mit einem zweiten Deskriptor, der mit dem ersten Deskriptor übereinstimmt, und
- Senden einer Kopie der Anfrage an das Protokollierungsmodul im Fall einer Übereinstimmung des ersten Deskriptors mit dem zweiten Deskriptor, der zum Protokollierungsmodul gehört, zum Protokollieren des Ereignisses;
- Empfangen der Anfrage durch das Protokollierungsmodul und Hinzufügen der besagten Anfrage zu einer Protokolldatei, die im Protokollierungsmodul enthalten ist, für die Aufzeichnung des entsprechenden Ereignisses.

2. Verfahren nach Anspruch 1, wobei jeder der zweiten Deskriptoren bezeichnend ist für eine Klasse von Anfragen, die für die entsprechende Anwendung aus der Gruppe von Anwendungen akzeptabel sind.

3. Verfahren nach Anspruch 1, weiterhin umfassend das Speichern des Ereignisses in einer Protokolldatei durch das Protokollierungsmodul, wenn eine Kopie der Anfrage von dem Protokollierungsmodul empfangen wird.

4. Verfahren nach Anspruch 1 oder 3, wobei der zweite Deskriptor bezeichnend ist für die Klasse von Anfragen oder Triggern, die von dem Protokollierungsmodul als Ereignisse zu protokollieren sind.

5. Verfahren nach einem beliebigen der vorstehenden Ansprüche 1 bis 4, wobei der erste Deskriptor in einem Auszeichnungssprachformat generiert wird, vorzugsweise in einem erweiterbaren Auszeichnungssprachformat (XML).

6. Verfahren nach einem beliebigen der vorstehenden Ansprüche 1 bis 5, wobei jeder der zweiten Deskriptoren in einem Auszeichnungssprachformat gespeichert wird, vorzugsweise in einem erweiterbaren Auszeichnungssprachformat (XML).

7. Verfahren nach einem beliebigen der vorstehenden Ansprüche 1 bis 6, wobei die Anfrage eine Protokollanfrage eines Protokolltyps aus einer Gruppe von Protokollen ist.

8. Verfahren nach Anspruch 7, wobei die Gruppe von Protokollen eines oder mehrere aus den folgenden Protokollen umfasst: Hypertext-Übertragungsprotokoll (http), Radius, COPS, SIP, Kurznachrichtendienst (SMS), SNMP, IETF.

9. Verfahren nach einem beliebigen der vorstehenden Ansprüche 1 bis 8, wobei mindestens eine Teilgruppe der Gruppe von Anwendungen Servlets umfasst.

10. Netzwerkelement (1) zum Routen einer Anfrage zu einer Anwendung (6) aus einer Gruppe von Anwendungen, wobei das Netzwerkelement Folgendes umfasst:
- Mittel (3) zum Analysieren der Anfrage,
- Mittel (3) zum Generieren eines ersten Deskriptors für das Ergebnis der Analyse,
- Mittel (2) zum Speichern von zweiten Deskriptoren, wobei jeder der zweiten Deskriptoren zu einer Anwendung aus der Gruppe von Anwendungen gehört und einer der zweiten Deskriptoren zu einem Protokollierungsmodul gehört, das als eine Anwendung mit einem bestimmten Deskriptor registriert ist, wobei der bestimmte Deskriptor, der zum Protokollierungsmodul gehört, eine Klasse von Protokollanfragen spezifiziert, die zum Protokollierungsmodul weitergeleitet werden müssen, um eine Protokolldatei zu erstellen,
- Mittel (4) zum Vergleichen des ersten Deskriptors mit den zweiten Deskriptoren,
- Mittel (1) zum Routen der Anfrage zu der Anwendung mit einem zweiten Deskriptor, der mit dem ersten Deskriptor übereinstimmt, und
- Mittel (1) zum Senden einer Kopie der Anfrage an das Protokollierungsmodul (7) im Fall einer Übereinstimmung des ersten Deskriptors mit dem zweiten Deskriptor, der zum Protokollierungsmodul gehört, zum Protokollieren eines entsprechenden Ereignisses;
wohingegen das Netzwerkelement ein Mapper ist.

11. Netzwerkelement nach Anspruch 10, wobei jeder der zweiten Deskriptoren bezeichnend ist für eine Klasse von Anfragen, die für die entsprechende Anwendung aus der Gruppe von Anwendungen akzeptabel sind.

12. Netzwerkelement nach Anspruch 10, wobei der zweite Deskriptor bezeichnend ist für eine Klasse von Anfrage oder Triggern, die von dem Protokollierungsmodul zu protokollieren sind.

13. Netzwerkelement nach einem beliebigen der vorstehenden Ansprüche 10 bis 12, wobei der erste Deskriptor und die zweiten Deskriptoren ein Auszeichnungssprachformat aufweisen, vorzugsweise ein erweiterbares Auszeichnungssprachformat (XML).

14. Netzwerkelement nach einem beliebigen der vorstehenden Ansprüche 10 bis 13, wobei die Anfrage eines Protokolltyps aus einer Gruppe von Protokollen ist.

15. Netzwerkelement nach Anspruch 14, wobei die Gruppe von Protokollen mindestens einen der folgenden Protokolltypen umfasst: Hypertext-Übertragungsprotokoll (http), Radius, COPS, SIP, Kurznachrichtendienst (SMS), SNMP, IETF.

16. Netzwerkelement nach einem beliebigen der vorstehenden Ansprüche 10 bis 15, wobei mindestens eine Teilgruppe der Gruppe von Anwendungen Servlets umfasst.

17. Computersystem, umfassend ein Netzwerkelement nach einem beliebigen der vorstehenden Ansprüche 10 bis 16.

18. Computerprogrammprodukt, das auf einem computernutzbaren Medium oder in einer Datei zum Herunterladen über ein Computernetzwerk gespeichert ist, umfassend computerlesbare Programmmittel, um ein Computersystem zu veranlassen, ein Verfahren nach einem beliebigen der vorstehenden Ansprüche 1 bis 9 durchzuführen, wenn das Programm auf dem Computersystem ausgeführt wird.

## Revendications

1. Procédé pour la journalisation d'un événement et le routage d'une demande vers une application d'un ensemble d'applications, le procédé comprenant les étapes suivantes :
- analyser la demande,
- générer un premier descripteur pour le résultat de l'analyse,
- comparer le premier descripteur à des seconds descripteurs, chacun des seconds descripteurs appartenant à une application de l'ensemble d'applications et un des seconds descripteurs appartient au module de journalisation qui est enregistré comme une application avec un descripteur spécial, le descripteur spécial appartenant au module de journalisation spécifiant une classe de demandes de protocole qui ont besoin d'être transférées au module de journalisation pour créer un fichier journal,
- router la demande vers l'application ayant un second descripteur concordant avec le premier descripteur, et
- envoyer une copie de la demande au module de journalisation dans le cas d'une concordance du premier descripteur et du second descripteur appartenant au module de journalisation pour la journalisation de l'événement ;
- recevoir la demande par le module de journalisation et ajouter ladite demande à un fichier journal contenu dans le module de journalisation pour l'enregistrement de l'événement correspondant.

2. Procédé selon la revendication 1, dans lequel chacun des seconds descripteurs étant descriptif d'une classe de demandes acceptables pour l'application correspondante de l'ensemble d'applications.

3. Procédé selon la revendication 1, comprenant en outre le stockage de l'événement dans un fichier journal par le module de journalisation lorsqu'une copie de la demande est reçue par le module de journalisation.

4. Procédé selon les revendications 1 ou 3, dans lequel le second descripteur étant descriptif de la classe de demandes ou de déclencheurs devant être journalisés comme des événements par le module de journalisation.

5. Procédé selon l'une quelconque des revendications 1 à 4 précédentes, dans lequel le premier descripteur étant généré dans un format de langage de balisage, de préférence dans un format de langage de langage de balisage, étendu (XML).

6. Procédé selon l'une quelconque des revendications 1 à 5 précédentes, dans lequel chacun des seconds descripteurs étant stocké dans un format de langage de balisage, de préférence dans un format de langage de langage de balisage étendu (XML).

7. Procédé selon l'une quelconque des revendications 1 à 6 précédentes, dans lequel la demande étant une demande de protocole d'un type de protocole d'un ensemble de protocoles.

8. Procédé selon la revendication 7, dans lequel l'ensemble de protocoles comprenant un ou plusieurs des protocoles suivants : protocole de transfert hypertexte (http), Radius, COPS, SIP, service de messages courts (SMS), SNMP, IETF.

9. Procédé selon l'une quelconque des revendications 1 à 8 précédentes, dans lequel au moins un sous-ensemble de l'ensemble d'applications étant des servlets.

10. Élément de réseau (1) pour router une demande vers une application (6) d'un ensemble d'applications, l'élément de réseau comprenant
- des moyens (3) pour analyser la demande,
- des moyens (3) pour la génération d'un premier descripteur pour le résultat de l'analyse,
- des moyens (2) pour le stockage de seconds descripteurs, chacun des seconds descripteurs appartenant à une application de l'ensemble d'applications et un des seconds descripteurs appartenant à un module de journalisation qui est enregistré comme une application avec un descripteur spécial, le descripteur spécial appartenant au module de journalisation spécifiant une classe de demandes de protocole qui ont besoin d'être transférées au module de journalisation pour créer un fichier journal,
- des moyens (4) pour comparer le premier descripteur aux seconds descripteurs,
- des moyens (1) pour router la demande vers l'application ayant un second descripteur concordant avec le premier descripteur, et
- des moyens (1) pour envoyer une copie de la demande à un module de journalisation (7) dans le cas d'une concordance du premier descripteur et du second descripteur appartenant au module de journalisation pour la journalisation d'un événement correspondant ;
attendu que l'élément de réseau est un mappeur.

11. Élément de réseau selon la revendication 10, dans lequel chacun des seconds descripteurs est descriptif d'une classe de demandes acceptables pour l'application correspondante de l'ensemble d'applications.

12. Élément de réseau selon la revendication 10, dans lequel le second descripteur étant descriptif d'une classe de demandes ou de déclencheurs devant être journalisés par le module de journalisation.

13. Élément de réseau selon l'une quelconque des revendications 10 à 12 précédentes, dans lequel le premier descripteur et les seconds descripteurs ayant un format de langage de balisage, de préférence un format de langage de langage de balisage étendu (XML).

14. Élément de réseau selon l'une quelconque des revendications 10 à 13 précédentes, dans lequel la demande étant d'un type de protocole d'un ensemble de protocoles.

15. Élément de réseau selon la revendication 14, dans lequel l'ensemble de protocoles comprenant au moins un des types de protocole suivants : protocole de transfert hypertexte (http), Radius, COPS, SIP, service de messages courts (SMS), SNMP, IETF.

16. Élément de réseau selon l'une quelconque des revendications 10 à 15 précédentes, dans lequel au moins un sous-ensemble de l'ensemble d'applications étant des servlets.

17. Système informatique comprenant un élément de réseau conformément à l'une quelconque des revendications 10 à 16 précédentes.

18. Produit de programme informatique stocké sur un support utilisable par ordinateur ou dans un fichier pour le téléchargement sur un réseau informatique, comprenant des moyens de programme lisible par ordinateur pour amener un système informatique à effectuer un procédé selon l'une quelconque des revendications 1 à 9 précédentes lorsque le programme est exécuté sur le système informatique.
